# EUROPÄISCHE PATENTSCHRIFT

(11) **EP 1 239 009 B1**
(45) Veröffentlichungstag und Bekanntmachung des Hinweises auf die Patenterteilung: **12.08.2009**
(21) Anmeldenummer: 02003295.9
(22) Anmeldetag: 25.02.2002
(51) Int. Cl.: C09B 23/10, C09B 67/22, C08K 5/3445

(54) **Verfahren zur Herstellung von unsymmetrischen Methinfarbstoffen**
Process for the preparation of asymmetric methine dyestuffs
Procédé pour la préparation de colorants méthines asymétriques

(30) Priorität: 09.03.2001 DE 10111731
(43) Veröffentlichungstag der Anmeldung: 11.09.2002
(73) Patentinhaber: LANXESS Deutschland GmbH, 51369 Leverkusen (DE)
(72) Erfinder: Stawitz, Josef-Walter, Dr., 51519 Odenthal (DE); Reinhardt, Karl-Heinz, 40789 Monheim (DE); Thiebes, Christoph, Dr., 50670 Köln (DE)

(56) Entgegenhaltungen:
- EP-A- 0 087 044
- EP-A- 0 419 110
- DE-B- 1 075 944
- DE-B- 1 154 894
- DE-B- 1 172 387
- GB-A- 1 181 951
- US-A- 2 840 443
- US-A- 5 004 674
- DATABASE WPI Section Ch, Week 199310 Derwent Publications Ltd., London, GB; Class E23, AN 1993-081247 XP002266956 -& JP 05 027368 A (KONICA CORP), 5. Februar 1993 (1993-02-05)
- DATABASE WPI Section Ch, Week 198108 Derwent Publications Ltd., London, GB; Class E23, AN 1981-12651D XP002266957 -& JP 55 161232 A (ORIENTAL PHOTO IND CO LTD), 15. Dezember 1980 (1980-12-15)

## Beschreibung

Die Erfindung betrifft ein neues Verfahren zur Herstellung von unsymmetrischen Methinfarbstoffen, Methinfarbstoffinischungen, sowie ein Verfahren zu ihrer Herstellung und ihre Verwendung zum Massefärben von organischen polymeren Materialien.

Unsymmetrische Methinfarbstoffe, wie beispielsweise das in Beispiel 1 dieser Anmeldung, eignen sich hervorragend zum Massefärben von Kunststoffen. Farbstoffe dieser Art werden beispielsweise durch Kondensation des entsprechenden Pyrazolonaldehyd mit dem entsprechenden 2-Methylenindolenin hergestellt (vgl. DE-B 1 154 894).

Alternativ können sie auch durch Kondensation des entsprechenden 2-Methylenindolenin-ω-aldehyds mit Pyrazolon hergestellt werden (vgl. DE-B 1 172 387 sowie EP-A 419 110).

Gemäß F. Würthner, R. Sens, K.-H. Etzbach und G. Seybold, Angew. Chemie, 1999, 111 Nr. 11, S. 1753 bis 1757 wird zur Herstellung spezieller Merocyanine beispielsweise Essigsäureanhydrid als Lösungsmittel eingesetzt.

Aus C. Reidlinger, R. Dworczak, W. M. F. Fabian und H. Junck, Dyes and Pigments 24 (1994) Seiten 185 bis 204 werden zur Herstellung Acetonitrile als auch Essigester als Lösungsmittel eingesetzt.

Die geschilderten Verfahrensweisen haben u.a. den Nachteil, dass wenigstens eine der beiden Eduktkomponenten, vorzugsweise der Aldehyd, in einer weiteren Stufe zunächst hergestellt werden muss.

Überraschenderweise wurde nun ein Verfahren zur Herstellung der Verbindungen der Formel I gefunden 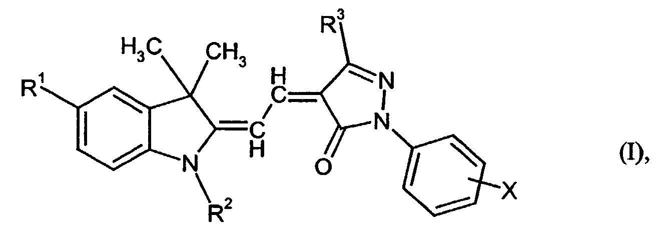 worin
- R¹ =: H, Halogen, insbesondere Cl, Br und F, Alkyl, insbesondere C₁-C₆-Alkyl, Alkoxy, inbesondere C₁-C₆-Alkoxy, Nitro, Cyano, Sulfonamid, insbesondere SO₂NR⁴R⁵, COOH, Carbonsäureester, insbesondere COOR⁹, worin R⁹ für C₁-C₆-Alkyl steht oder Carbonsäureamid, insbesondere CONR⁴R⁵,
- R² =: Alkyl, insbesondere C₁-C₆-Alkyl,
- R³ =: Alkyl, insbesondere C₁-C₆-Alkyl, COOH, Carbonsäureester, insbesondere COOR⁹, worin R⁹ für C₁-C₆-Alkyl steht,
- X =: H, Halogen, insbesondere Cl, Br und F, SO₂NR⁴R⁵, SO₂H=CH-NR⁶R⁷ oder SO₂R⁸, wobei R⁴ bis R⁷ unabhängig voneinander für Wasserstoff oder Alkyl, insbesondere für C₁-C₆-Alkyl und R⁸ für Alkyl oder Hydroxyalkyl, insbesondere Hydroxyethylen stehen,
das dadurch gekennzeichnet ist, dass man Verbindungen der Formel II, III und IV

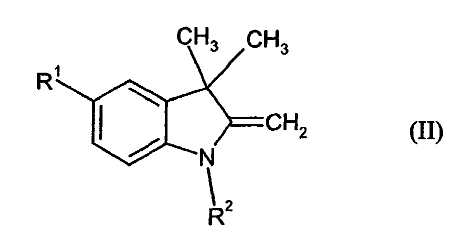

CH(OR)₃ (III)

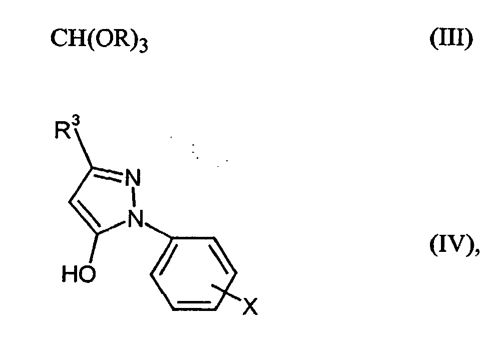

worin
- R: für C₁-C₆-Alkyl, insbesondere für Methyl steht und
- R¹, R², R³ und X: die oben angegebene Bedeutung besitzt, in Gegenwart eines organischen Lösungsmittels, ausgewählt aus der Gruppe Dioxan, chlorierte Kohlenwasserstoffe, Chlorbenzol, Dichlorbenzol, Toluol, Xylol, N-Methylpyrrolidon und niedere Alkohole wie Methanol, Ethanol, Propanole, Butanole, Pentanole, Glykole wie Ethylenglykol, Diethylenglykol und die entsprechenden Mono- und Dialkylether der Glykole, ganz besonders bevorzugt wird n-Butanol eingesetzt, miteinander umsetzt.

Unter organischen Lösungsmitteln werden Verbindungen verstanden, die unter den Bedingungen der Kondensationsreaktion keine Reaktion mit den Reaktionsteilnehmern oder Produkten eingehen.

In einer bevorzugten Ausführungsform des erfindungsgemäßen Verfahrens beträgt das molare Verhältnis von Verbindung II:IV:III, 1:1:1 bis 1:1,2:2,0, insbesondere 1:1:1 bis 1:1:1,3.

Gegebenenfalls entstehende symmetrische Kondensationsprodukte (Methinfarbstoffe) können leicht abgetrennt werden.

Bevorzugt erfolgt das erfindungsgemäße Verfahren bei einer Temperatur von 70-180°C, insbesondere bei 90-120°C. Dabei wird beispielsweise unter Rückfluss gearbeitet, wobei man gegebenenfalls den entstehenden Alkohol ganz oder teilweise abdestilliert. Es kann auch im geschlossenen System oberhalb des Siedepunktes des verwendeten Lösungsmittels bzw. wenigstens einer Reaktionskomponente, bzw. des freiwerdenden Alkohols HOR unter Druck gearbeitet werden.

Unter Kondensationsreaktion wird im Rahmen dieser Erfindung daher eine Reaktion verstanden, bei der Alkohol freigesetzt wird.

Die erfindungsgemäße Kondensation gelingt durchweg bereits ohne weitere Zusätze. Als Katalysatoren können basische Katalysatoren, wie z.B. Pyridin, Piperidin oder Triethylamin, oder aber saure Katalysatoren wie z.B. p-Toluolsulfonsäure, Salzsäure, Schwefelsäure oder Carbonsäuren wie z.B. Ameisensäure, Essigsäure oder Propionsäure eingesetzt werden.

In einer bevorzugten Ausführungsform wird ca. 1 Mol der Verbindung II, insbesondere 1,3,3-Trimethyl-2-methylen-indolin oder ein Derivat davon in Butanol mit ca. 1 Mol der Verbindung IV, insbesondere Pyrazolon-(5) gemischt und nach Zusatz von ca. 1,3 Mol Orthoameisensäuretrimethylester gegebenenfalls in Gegenwart eines Katalysators, insbesondere in Gegenwart von katalytischen Mengen Eisessig so lange zum Rückfluss, gegebenenfalls unter Abdestillieren von Methanol, erhitzt, bis die eingesetzten Komponenten umgesetzt sind. Dann wird abgekühlt, abfiltriert, mit Methanol und Wasser gewaschen und getrocknet.

Bevorzugt werden als Indoline der Formel II eingesetzt: 1,3,3-Trimethyl-2-methylenindolin, 1,3,3-Trimethyl-2-methylen-indolin-5-carbonsäuremethylester, 1,3,3-Trimethyl-5-chlor-2-methylenindolin, 1,3,3-Triethyl-5-methoxy-2-methylenindolin.

Bevorzugt werden 1,3,3-Trimethyl-2-methylen-indoline eingesetzt, die in 5-Stellung Substituenten wie Carbonsäureester, Carbonsäureamide, Halogen, Alkoxy, Alkyl, oder Sulfonamid tragen.

Ganz besonders bevorzugt ist das 1,3,3-Trimethyl-2-methylenindolin-carbonsäuremethylester.

Als bevorzugte Verbindungen der Formel IV werden eingesetzt: 1-Phenyl-3-methylpyrazolon (5), 1-Phenyl-pyrazolon-3-carbonsäureester und 1-Phenylpyrazolone, vorzugsweise solche, deren Phenylrest mit dem Sulfonylrest SO₂N=CH-N(CH₃)₂ oder SO₂N(Alkyl)₂ substituiert ist.

Eine bevorzugte Verbindung der Formel III ist Orthoameisensäure-methylester.

In einer bevorzugten Ausführungsform des erfindungsgemäßen Verfahrens wird die Reaktionsmischung bis zur Trockene eingedampft und der trockene Rückstand dann aus einem geeigneten Lösungsmittel umkristallisiert. Bevorzugt wird die Reaktionsmischung nach dem Erkalten abfiltriert, der Filterkuchen mit Alkohol und Wasser gewaschen und anschließend getrocknet.

Die nach dem erfindungsgemäßen Verfahren bevorzugt erhaltene Produktmischung enthält vorzugsweise
90 - 100, insbesondere 95 - 100 Gew.-% der Verbindung der Formel I und
0 - 10, insbesondere 0 - 5 Gew.-% der Verbindung der Formel V.

Die Verbindung der Formel V ist das symmetrische Kondensationsprodukt aus den Verbindungen der Formeln II und IV (2mol Äquivalente) 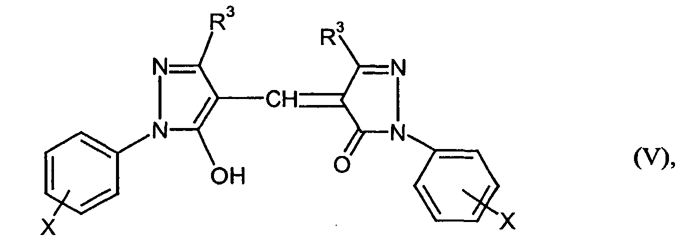 worin
- R³ und X: die oben angegebene Bedeutung haben.

Eine Verfahrensweise, die zu besonders hohem Anteil an unsymmetrischer Verbindung der Formel I führt, ist vorzugsweise das Waschen des Filterkuchens der Reaktionsmischung mit Alkoholen, z.B. Butanol oder Methanol. Besonders bevorzugt ist auch die Verwendung von Butanol als Lösungsmittel während der Kondensationsreaktion.

Die Erfindung betrifft weiterhin Farbstoffmischungen enthaltend
90 - 99,9 Gew.-% des Farbstoffes der Formel I und
0,1 - 10 Gew.-% des Farbstoffes der Formel V.

Die erfindungsgemäße Mischung hat ebenfalls gute Eigenschaften bei der Verwendung zum Massefärben von Kunststoffen.

Die Erfindung betrifft weiterhin ein Verfahren zur Herstellung der erfindungsgemäßen Mischung. Dies ist durch die gleichen Merkmale wie das erfindungsgemäße Verfahren zur Herstellung von Verbindungen der Formel I gekennzeichnet. Bevorzugt erfolgt die Umsetzung der Verbindungen II, III und IV in wenig Lösungsmittel, vorzugsweise in 40 bis 70 Gew.-% Lösungsmittel, bezogen auf die Gesamtmenge an Edukten der Formeln II, III und IV. Ebenfalls bevorzugt ist das Waschen des erhaltenen Filterkuchens mit weniger Methanol. Bevorzugt wird als organisches Lösungsmittel für die Kondensationsreaktion Eisessig oder Glykole verwendet.

Die Erfindung betrifft daher auch die Verwendung der erfindungsgemäßen Farbstoffmischung zum Massefärben von Kunststoffen.

Die erfindungsgemäße Farbstoffmischung eignet sich hervorragend zum Färben von Kunststoffen in der Masse. Dabei ergibt sie gelborange Färbungen.

Unter Massefärben werden hierbei insbesondere Verfahren verstanden, bei denen der Farbstoff in die geschmolzene Kunststoffinasse eingearbeitet wird, z.B. unter Zuhilfenahme eines Extruders, oder bei denen der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester, Polyamide sowie Polyolefine, insbesondere Polyethylen und Polypropylen, oder Polycarbonate.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat, Polyvinylchlorid u.a.

Weiterhin geeignet sind Polyester wie beispielsweise Polyethylenterephthalate, Polycarbonate und Celluloseester.

Bevorzugt sind Polystyrol, Styrol-Mischpolymere, Polycarbonate, Polymethacrylate und Polyamide. Besonders bevorzugt ist Polystyrol, Polyethylen und Polypropylen.

Die erwähnten hochmolekularen Verbindungen können einzeln oder in Gemischen, als plastische Massen oder Schmelzen vorliegen.

Die erfindungsgemäßen Farbstoffe werden vorzugsweise in feinverteilter Form zur Anwendung gebracht, wobei Dispergiermittel mitverwendet werden können aber nicht müssen.

Wird die Farbstoffmischung nach der Polymerisation eingesetzt, so wird sie vorzugsweise mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und durch Rühren homogen verteilen. Das derart vorgefärbte Material wird dann wie üblich z.B. durch Verspinnen zu Borsten, Fäden usw. oder durch Extrusion oder im Spritzguss-Verfahren zu Formteilen weiterverarbeitet.

Da die Farbstoffmischung gegenüber Polymerisationskatalysatoren, insbesondere Peroxiden, beständig ist, ist es auch möglich, den Farbstoff den monomeren Ausgangsmaterialien für die Kunststoffe zuzusetzen und dann in Gegenwart von Polymerisationskatalysatoren zu polymerisieren. Dazu wird der Farbstoff vorzugsweise in den monomeren Komponenten gelöst oder mit ihnen innig vermischt.

Die erfindungsgemäße Farbstoffmischung wird vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren erhält man transparente bzw. gedeckte brillante orange Färbungen mit guter Hitzebeständigkeit sowie guter Licht-, Wetterund Sublimierechtheit.

In das erfindungsgemäße Verfahren können auch Mischungen der erfmdungsgemäßen Farbstoffinischung der Formel (I) mit anderen Farbstoffen und/oder anorganischen bzw. organischen Pigmenten eingesetzt werden.

Die Erfindung wird erläutert, jedoch nicht beschränkt durch die folgenden Beispiele, in denen die Teile gewichtsmäßig angegeben sind, Prozentangaben Gewichtsprozente (Gew.-%) bedeuten.

### Beispiel 1

46,2 g 1,3,3-Trimethyl-2-methylen-indolin-5-carbonsäuremethylester werden unter Stickstoff in 100 ml n-Butanol gelöst. Dann gibt man 34,8 g 1-Phenyl-3-methylpyrazolon-(5) zu und verrührt ca. 10 Minuten. Nach Zusatz von 22,0 g Orthoameisensäuretrimethylester und 1 ml Eisessig erhitzt man 5 Stunden zum Rückfluss (102 bis 105°C). Dann setzt man 3 g Orthoameisensäuretrimethylester nach und hält noch weitere 10 Stunden bei Rückfluss. Man lässt unter Rühren abkühlen und rührt 2 Stunden nach. Dann filtriert man unter Anlegen eines Vakuums ab, wäscht mit 200 ml Methanol, dann mit 500 ml heißem Wasser und trocknet bei 80°C im Vakuum.

Man isoliert 78,8 g Farbstoff, der zu >98,5 % aus dem unsymmetrischen Methinfarbstoff der folgenden Formel 1 besteht. Der Farbstoff färbt Kunststoff, z.B. Polystyrol, in der Masse kräftig orange. Ohne Eisessig als Katalysator ist die Ausbeute ca. 4 % geringer.

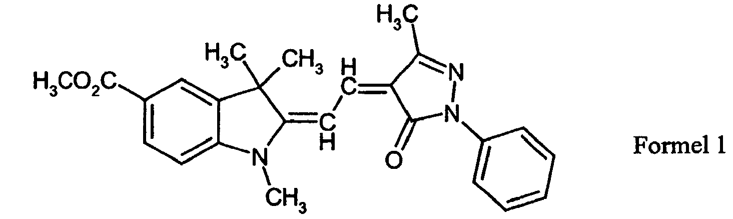

Durch Umkristallisieren aus Butanol wird der Farbstoff 1 in 97 % Ausbeute rein erhalten.

### Beispiel 2

Verfährt man wie in Beispiel 1, setzt aber 41,8 g 1-Phenyl-3-methylpyrazolon (5) und 31 g Orthoameisensäuremethylester ein, so isoliert man 85,9 g eines Farbstoffgemisches, das ca. 92 % unsymmetrischen Methinfarbstoff der Formel 1 und ca. 8 % des symmetrischen Methinfarbstoffs der unten stehenden Formel enthält. Das Farbstoffgemisch färbt Kunststoff, z.B. Polystyrol, in der Masse kräftig orange, aber deutlich gelber als der nach Beispiel 1 hergestellte Farbstoff.

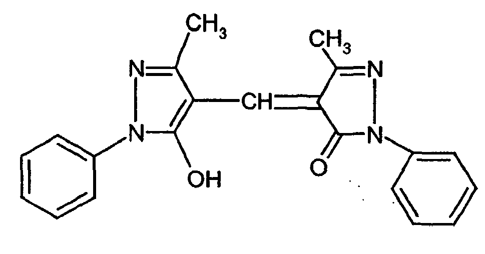

### Beispiel 3

46,2 g 1,3,3-Trimethyl-2-methylen-indolin-5-carbonsäuremethylester werden unter Stickstoff in 100 ml n-Butanol gelöst. Dann gibt man 61,6 g des unten abgebildeten Pyrazolon derivats zu und verrührt ca. 10 Minuten.

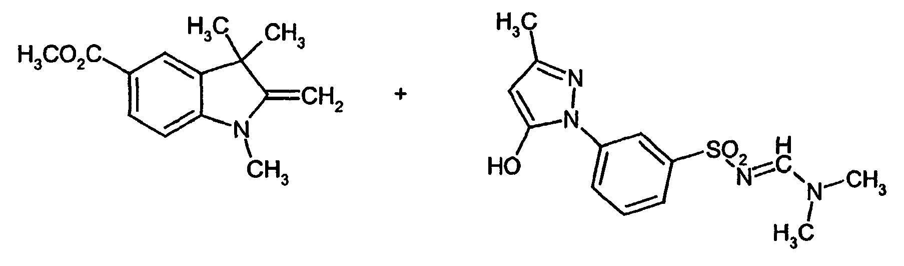

Nach Zusatz von 22,0 g Orthoameisensäuretrimethylester erhitzt man 5 Stunden zum Rückfluss (102- 105°C). Dann setzt man 3 g Orthoameisensäuretrimethylester nach und hält noch weitere 10 Stunden bei Rückfluss. Man lässt unter Rühren abkühlen und rührt 2 Stunden nach. Dann saugt man ab, wäscht mit 200 ml Methanol, dann mit 500 ml heißem Wasser und trocknet bei 80°C im Vakuum.

Nach Umkristallisation aus Butanol erhält man 100,6 g Farbstoff der Formel 2 , das sind 91,6 % d. Th.

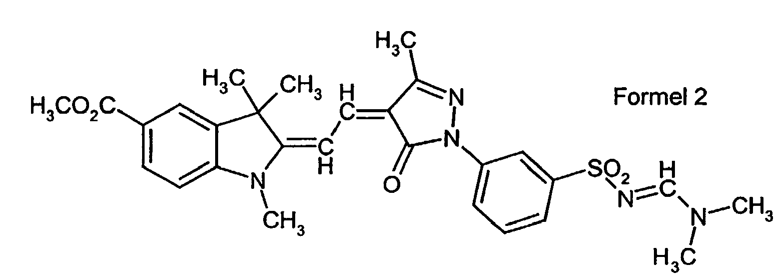

### Beispiel 4

46,2 g 1,3,3-Trimethyl-2-methylen-indolin-5-carbonsäuremethylester werden unter Stickstoff in 100 ml Ethylenglycol gelöst. Dann gibt man 37,6 g des unten abgebildeten Pyrazolon derivats zu und verrührt ca. 10 Minuten.

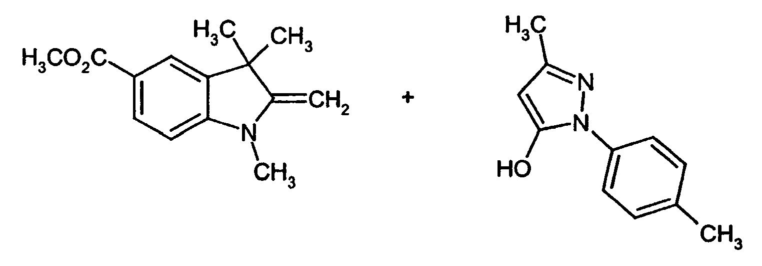

Nach Zusatz von 22,0 g Orthoameisensäuretrimethylester erhitzt man 5 Stunden zum Rückfluss (102 bis 105°C). Dann setzt man 3 g Orthoameisensäuretrimethylester nach und hält noch weitere 10 Stunden bei Rückfluss. Man lässt unter Rühren abkühlen und rührt 2 Stunden nach. Dann saugt man ab, wäscht mit 200 ml Methanol, dann mit 500 ml heißem Wasser und trocknet bei 80°C im Vakuum.

Nach Umkristallisation aus Butanol erhält man 77,0 g Farbstoff der Formel 3 , das sind 89,7 % der Theorie.

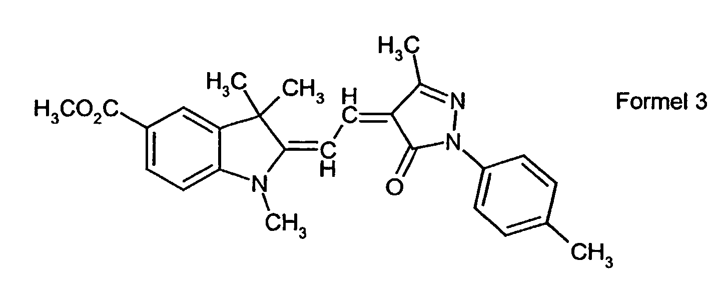

### Beispiel 5

46,2 g 1,3,3-Trimethyl-2-methylen-indolin-5-carbonsäuremethylester werden unter Stickstoff in 100 ml n-Butanol gelöst. Dann gibt man 46,4 g des unten abgebildeten Pyrazolon derivats zu und verrührt ca. 10 Minuten.

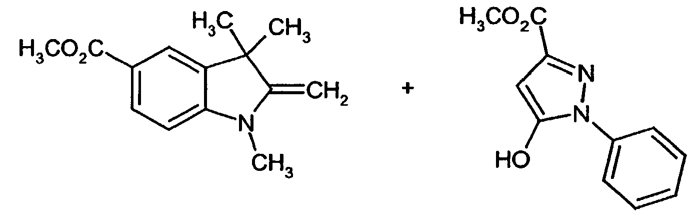

Nach Zusatz von 22,0 g Orthoameisensäuretrimethylester erhitzt man 5 Stunden zum Rückfluss (102 bis 105°C). Dann setzt man 3 g Orthoameisensäuretrimethylester nach und hält noch weitere 10 Stunden bei Rückfluss. Man lässt unter Rühren abkühlen und rührt 2 Stunden nach. Dann saugt man ab, wäscht mit 200 ml Methanol, dann mit 500 ml heißem Wasser und trocknet bei 80°C im Vakuum.

Nach Umkristallisation aus Butanol erhält man 88,2 g Farbstoff der Formel 4, das sind 93,2 % der Theorie.

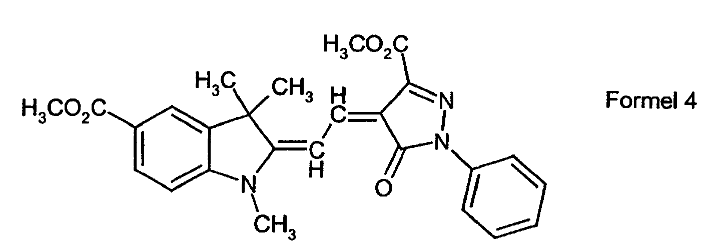

### Beispiel 6

40,6 g 1,3,3-Trimethyl-5-methoxy-2-methylen-indolin werden unter Stickstoff in 100 ml n-Butanol gelöst. Dann gibt man 46,4 g des unten abgebildeten Pyrazolon derivats zu und verrührt ca. 10 Minuten.

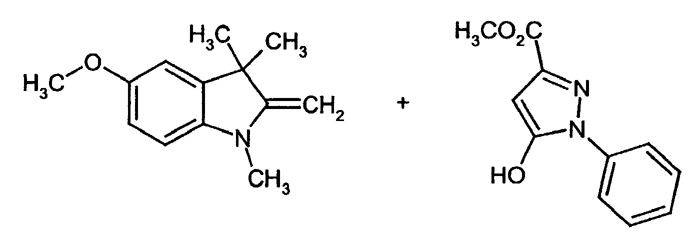

Nach Zusatz von 22,0 g Orthoameisensäuretrimethylester erhitzt man 5 Stunden zum Rückfluss (102 bis 105°C). Dann setzt man 3 g Orthoameisensäuretrimethylester nach und hält noch weitere 10 Stunden bei Rückfluss. Man lässt unter Rühren abkühlen und rührt 2 Stunden nach. Dann saugt man ab, wäscht mit 200 ml Methanol, dann mit 500 ml heißem Wasser und trocknet bei 80°C im Vakuum.

Nach Umkristallisation aus Butanol erhält man 76,5 g Farbstoff der Formel 5, das sind 86,0 % der Theorie.

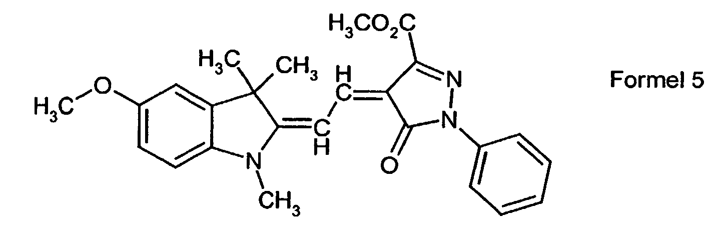

### Beispiel 7

41,5 g 1,3,3-Trimethyl-5-chlor-2-methylen-indolin werden unter Stickstoff in 100 ml n-Butanol gelöst. Dann gibt man 61,6 g des unten abgebildeten Pyrazolon derivats zu und verrührt ca. 10 Minuten.

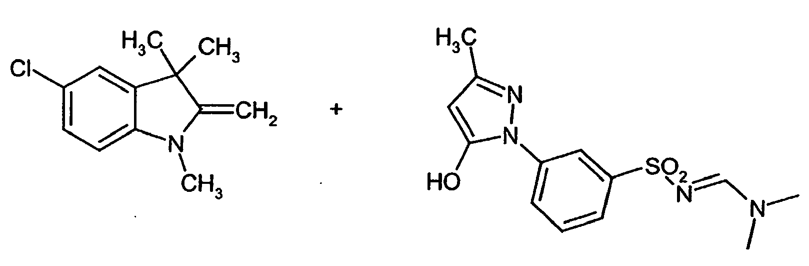

Nach Zusatz von 22,0 g Orthoameisensäuretrimethylester und erhitzt man 5 Stunden zum Rückfluss (102 bis 105°C). Dann setzt man 3 g Orthoameisensäuretrimethylester nach und hält noch weitere 10 Stunden bei Rückfluss. Man lässt unter Rühren abkühlen und rührt 2 Stunden nach. Dann saugt man ab, wäscht mit 200 ml Methanol, dann mit 500 ml heißem Wasser und trocknet bei 80°C im Vakuum.

Nach Umkristallisation aus Butanol erhält man 88,3 g Farbstoff der Formel 6, das sind 84,0 % der Theorie.

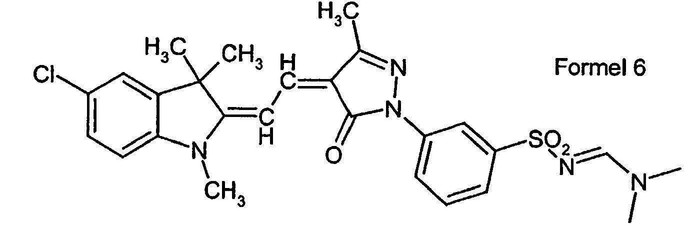

### Beispiel 8

41,5 g 1,3,3-Trimethyl-5-chlor-2-methylen-indolin werden unter Stickstoff in 100 ml n-Butanol gelöst. Dann gibt man 56,0 des unten abgebildeten Pyrazolon derivats zu und verrührt ca. 10 Minuten.

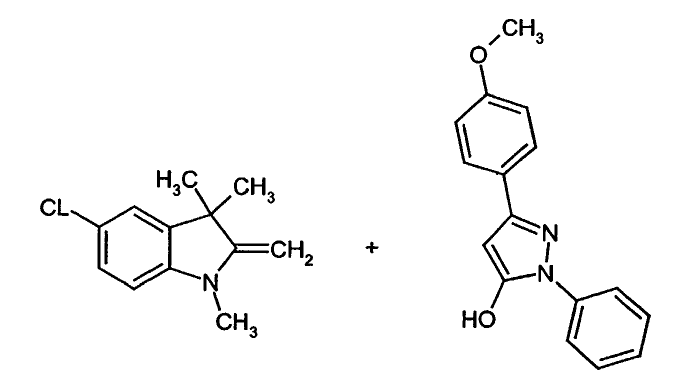

Nach Zusatz von 22,0 g Orthoameisensäuretrimethylester erhitzt man 5 Stunden zum Rückfluss (102 bis 105°C). Dann setzt man 3 g Orthoameisensäuretrimethylester nach und hält noch weitere 10 Stunden bei Rückfluss. Man lässt unter Rühren abkühlen und rührt 2 Stunden nach. Dann saugt man ab, wäscht mit 200 ml Methanol, dann mit 500 ml heißem Wasser und trocknet bei 80°C im Vakuum.

Nach Umkristallisation aus Butanol erhält man 80,1 g Farbstoff der Formel 7, das sind 82,2 % der Theorie.

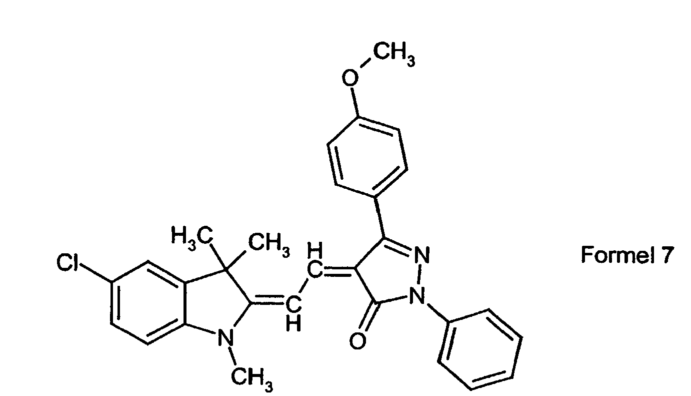

## Patentansprüche

1. Verfahren zur Herstellung der Verbindungen der Formel I 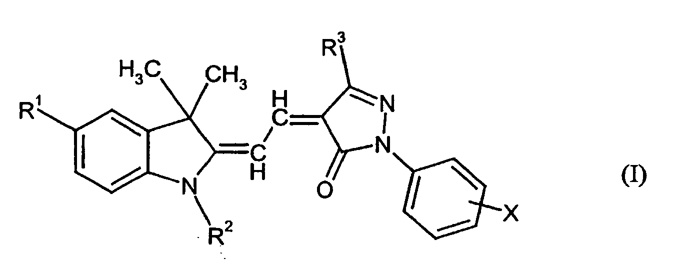 worin
R¹ H, Halogen, insbesondere Cl, Br und F, Alkyl, insbesondere C₁-C₆-Alkyl, Alkoxy, inbesondere C₁-C₆-Alkoxy, Nitro, Cyano, Sulfonamid, insbesondere SO₂NR⁴R⁵, COOH, Carbonsäureester, insbesondere COOR⁹, wobei R⁹ C₁-C₆-Alkyl bedeutet oder Carbonsäureamid, insbesondere CONR⁴R⁵,
R² Alkyl, insbesondere C₁-C₆-Allcyl,
R³ Alkyl, insbesondere C₁-C₆-Alkyl, COOH, Carbonsäureester, insbesondere COOR⁹ mit R⁹ gleich C₁-C₆-Alkyl bedeuten und
X für H, Halogen, insbesondere Cl, Br und F, SO₂NR⁴R⁵, SO₂NCHR⁶R⁷ oder SO₂R⁸ steht, wobei R⁴ bis R⁷ unabhängig voneinander für Wasserstoff oder Alkyl, insbesondere für C₁-C₆-Alkyl und R⁸ für Alkyl insbesondere C₁-C₆-Alkyl oder Hydroxyalkyl, insbesondere Hydroxyethylen stehen,
das **dadurch gekennzeichnet ist, dass** man Verbindungen der Formel II, III und IV 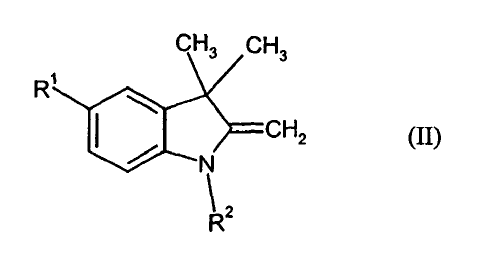
CH(OR)₃ (III) 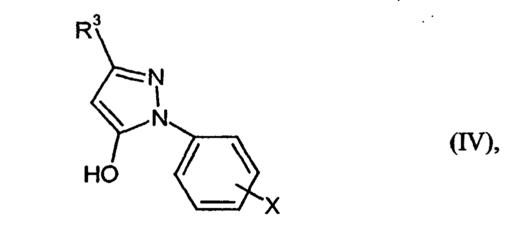
worin
R für C₁-C₆-Alkyl, insbesondere für Methyl steht und
R¹, R², R³ und X die oben angegebene Bedeutung besitzt, in Gegenwart eines organischen Lösungsmittels, ausgewählt aus der Gruppe Dioxan, chlorierte Kohlenwasserstoffe, Chlorbenzol, Dichlorbenzol, Toluol, Xylol, N-Methylpyrrolidon und niedere Alkohole wie Methanol, Ethanol, Propanole, Butanole, Pentanole, Glykole wie Ethylenglykol, Diethylenglykol und die entsprechenden Mono- und Dialkylether der Glykole, ganz besonders bevorzugt wird n-Butanol eingesetzt, miteinander umsetzt.

2. Verfahren gemäß Anspruch 1, **dadurch gekennzeichnet, dass** das molare Verhältnis von Verbindung II:IV:III, 1:1:1 bis 1:1,2:2,0, insbesondere 1:1:1 bis 1:1:1,3 beträgt.

3. Verfahren gemäß Anspruch 1, **dadurch gekennzeichnet, dass** die Umsetzung bei einer Temperatur von 70-180°C erfolgt.

4. Verfahren nach Anspruch 1 zur Herstellung der Verbindung

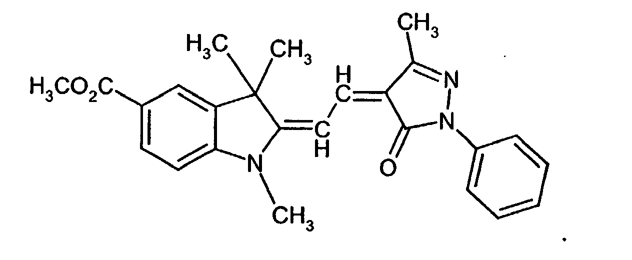

5. Mischung, enthaltend
90 - 99,9 Gew.-% der Verbindung der Formel I 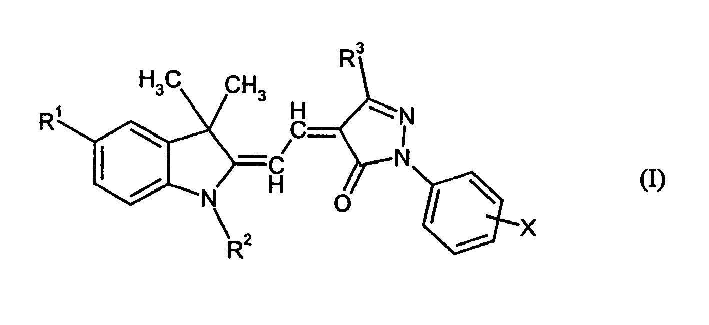 0,1 - 10 Gew.-% der Verbindung der Formel V 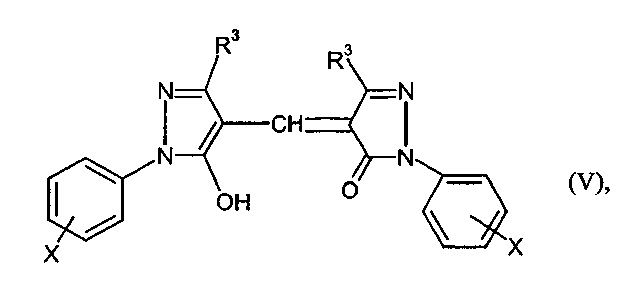 worin
R¹, R², R³ und X die in Anspruch 1 angegebene Bedeutung besitzen.

6. Verwendung einer Mischung gemäß Anspruch 5 zum Massefärben von Kunststoffen.

## Claims

1. Process for preparing the compounds of the formula I 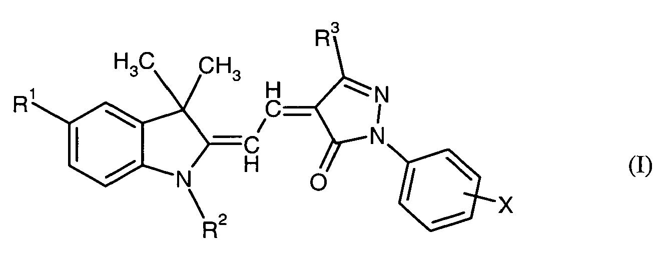 where
R¹ is H, halogen, especially Cl, Br and F, alkyl, especially C₁-C₆-alkyl, alkoxy, especially C₁-C₆-alkoxy, nitro, cyano, sulphonamide, especially SO₂NR⁴R⁵, COOH, carboxylic ester, especially COOR⁹, where R⁹ is C₁-C₆-alkyl, or carboxamide, especially CONR₄R₅,
R² is alkyl, especially C₁-C₆-alkyl,
R³ is alkyl, especially C₁-C₆-alkyl, COOH, carboxylic ester, especially COOR⁹ where R⁹ is C₁-C₆-alkyl, and
X is H, halogen, especially Cl, Br and F, SO₂NR⁴R⁵, SO₂NCHR⁶R⁷ or SO₂R⁸, where R⁴ to R⁷ are independently hydrogen or alkyl, especially C₁-C₆-alkyl, and R⁸ is alkyl especially C₁-C₆-alkyl or hydroxyalkyl, especially hydroxyethylene,
which is **characterized in that** compounds of the formulae II, III and IV 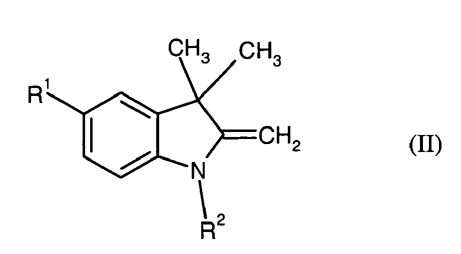
CH(OR)₃ (III) 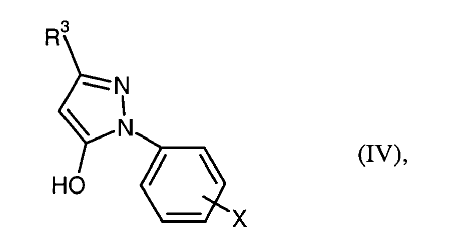
where
R is C₁-C₆-alkyl, especially methyl, and
R¹, R², R³ and X are each as defined above, are reacted with each other in the presence of an organic solvent selected from the group consisting of dioxane, chlorinated hydrocarbons, chlorobenzene, dichlorobenzene, toluene, xylene, N-methylpyrrolidone and lower alcohols such as methanol, ethanol, propanols, butanols, pentanols, glycols such as ethylene glycol, diethylene glycol and the corresponding mono- and dialkyl ethers of the glycols, most preferably n-butanol.

2. Process according to Claim 1, **characterized in that** the molar ratio of the compounds II:IV:III is in the range from 1:1:1 to 1:1.2:2.0, especially in the range from 1:1:1 to 1:1:1.3.

3. Process according to Claim 1, **characterized in that** the reaction is carried out at a temperature of 70-180°C.

4. Process according to Claim 1 for preparing the compound

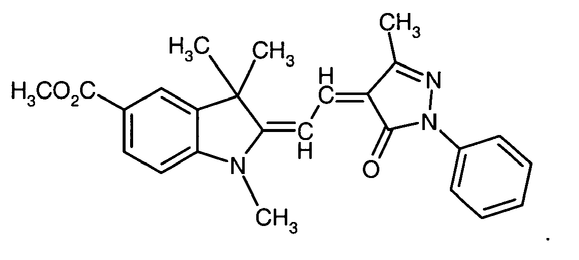

5. Mixture containing
90 - 99.9% by weight of the compound of the formula I 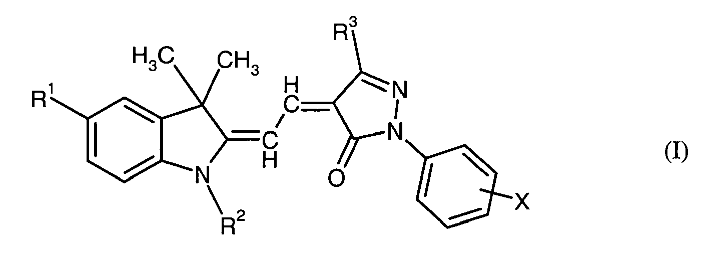 0.1 - 10% by weight of the compound of the formula V 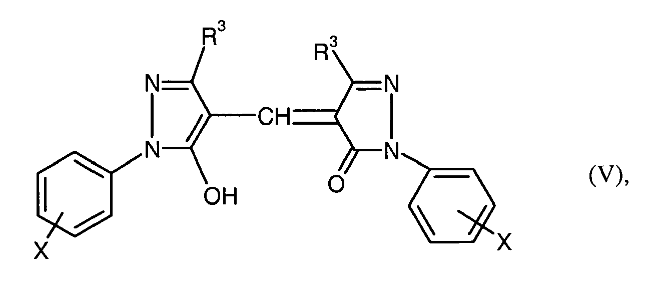 where
R¹, R², R³ and X are each as defined in Claim 1.

6. Use of a mixture according to Claim 5 for mass coloration of plastics.

## Revendications

1. Procédé pour la préparation des composés de formule I 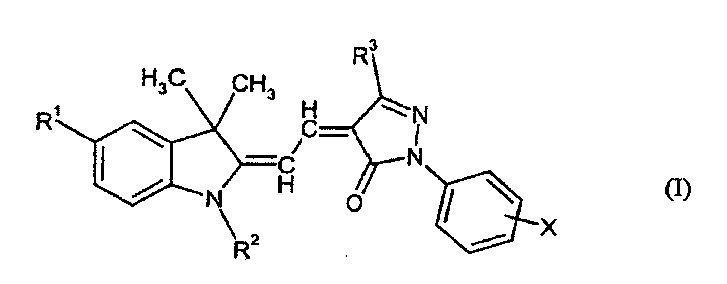 dans laquelle
R¹ représente H, un atome d'halogène, en particulier Cl, Br ou F, un groupe alkyle, en particulier alkyle en C₁-C₆, alcoxy, en particulier alcoxy en C₁-C₆, nitro, cyano, sulfonamido, en particulier SO₂NR⁴R⁵, COOH, ester d'acide carboxylique, en particulier COOR⁹, R⁹ représentant un groupe alkyle en C₁-C₆, ou carbamoyle, en particulier CONR⁴R⁵,
R² représente un groupe alkyle, en particulier alkyle en C₁-C₆,
R³ représente un groupe alkyle, en particulier alkyle en C₁-C₆, COOH, ester d'acide carboxylique, en particulier COOR⁹ où R⁹ représente un groupe alkyle en C₁-C₆ et
X représente H, un atome d'halogène, en particulier Cl, Br ou F, SO₂NR⁴R⁵, SO₂NCHR⁶R⁷ ou SO₂R⁸, R⁴ à R⁷ représentant, indépendamment les uns des autres, un atome d'hydrogène ou un groupe alkyle, en particulier un groupe alkyle en C₁-C₆, et R⁸ représentant un groupe alkyle, en particulier alkyle en C₁-C₆, ou hydroxyalkyle, en particulier hydroxyéthylène,
qui est **caractérisé en ce qu'**on fait réagir entre eux des composés de formules II, III et IV 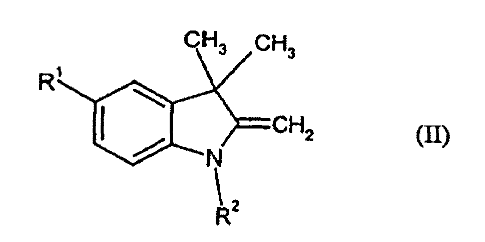
CH(OR)₃ (III) 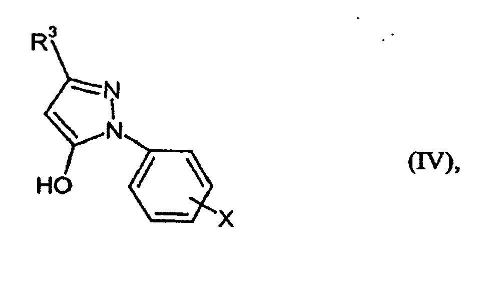
dans lesquelles
R représente un groupe alkyle en C₁-C₆, en particulier méthyle et
R¹, R², R³ et X ont les significations données plus haut, en présence d'un solvant organique choisi dans le groupe constitué par le dioxanne, les hydrocarbures chlorés, le chlorobenzène, le dichlorobenzène, le toluène, le xylène, la N-méthylpyrrolidone et des alcools inférieurs tels que le méthanol ; l'éthanol, les propanols, les butanols, les pentanols, les glycols tels que l'éthylèneglycol, le diéthylèneglycol et les mono- et dialkyléthers correspondants des glycols, de façon tout particulièrement préférée on utilise le n-butanol.

2. Procédé selon la revendication 1, **caractérisé en ce que** le rapport molaire des composés II:IV:III va de 1:1:1 à 1:1,2:2,0, en particulier de 1:1:1 à 1:1:1,3.

3. Procédé selon la revendication 1, **caractérisé en ce que** la réaction s'effectue à une température de 70-180 °C.

4. Procédé selon la revendication 1, pour la préparation du composé

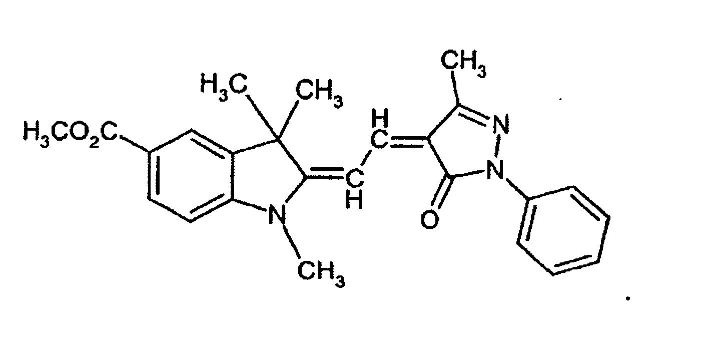

5. Mélange contenant
90-99,9 % en poids du composé de formule I 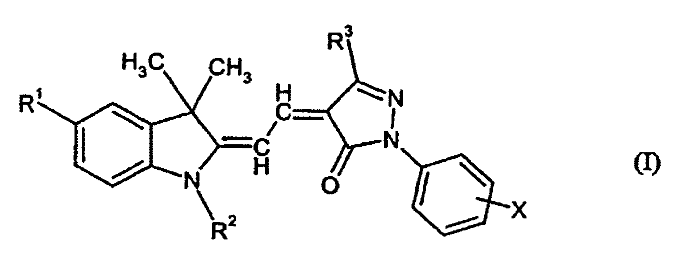 0,1-10 % en poids du composé de formule V 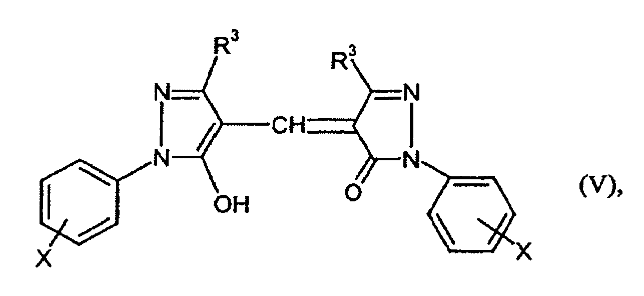 où
R¹, R², R³ et X ont les significations données dans la revendication 1.

6. Utilisation d'un mélange selon la revendication 5, pour la coloration dans la masse de matières plastiques.
